# EUROPEAN PATENT APPLICATION

(11) **EP 4 089 049 A1**
(43) Date of publication of application: **16.11.2022**
(21) Application number: 21738703.4
(22) Date of filing: 05.01.2021
(51) Int. Cl.: C01B 33/02, H01M 4/36, H01M 4/38, C01B 32/21

(54) **METHOD FOR PRODUCING PARTICLES**

(30) Priority: 07.01.2020 JP 2020000901
(71) Applicant: SEKISUI CHEMICAL CO., LTD., Osaka-shi Osaka 530-8565 (JP)
(72) Inventor: KUDOU, Takuya, Mishima-gun, Osaka 618-0021 (JP)
(74) Representative: Ter Meer Steinmeister & Partner
(86) International application number: PCT/JP2021/000054
(87) International publication number: WO 2021/141013

(57) **Abstract**

Provided is a method for producing particles with which particles excellent in conductivity can be produced easily. The method for producing particles 1, the particles 1 including a particle body 2, and a covering layer 3 covering at least a part of a surface 2a of the particle body 2, the method including a step of preparing a mixture containing the particle body 2, a layered compound 11, and a dispersion medium 12, and a step of applying a shear force to the mixture to exfoliate the layered compound 11 and cover the particle body 2 with the layered compound 11 to form the covering layer 3, and the dispersion medium 12 having a viscosity at 25°C of 1 mPa·s or more.

## Description

### TECHNICAL FIELD

The present invention relates to a method for producing particles, the particles including a particle body and a covering layer covering at least a part of the particle body.

### BACKGROUND ART

In recent years, research and development of power storage devices have been actively conducted for mobile devices, hybrid vehicles, electric vehicles, household power storage applications, and the like. As an electrode material of a power storage device, a compound such as graphene obtained by exfoliating a layered compound has attracted attention from the viewpoint of conductivity and environmental aspects.

Patent Document 1 below discloses a battery electrode containing a graphene-embraced or graphene-encapsulated electrode active material. In Patent Document 1, when a graphene-embraced or graphene-encapsulated electrode active material is produced, in the first step, a mixture is formed by mixing a multiple particles of a graphitic material and a multiple particles of a solid electrode active material in an impacting chamber of an energy impacting apparatus. At this time, the graphitic material has never been previously intercalated, oxidized, or exfoliated. The impacting chamber contains therein no ball-milling media other than the multiple particles of a solid electrode active material. In the next step, the energy impacting apparatus is operated for peeling off graphene sheets from the particles of graphitic material, the peeled graphene sheets are transferred to surfaces of the solid electrode active material particles, and the particles are fully embraced or encapsulated, whereby graphene-embraced or graphene-encapsulated electrode active material particles are produced.

### Related Art Document

### Patent Document

Patent Document 1: JP 2019-522868 A

### SUMMARY OF THE INVENTION

### PROBLEMS TO BE SOLVED BY THE INVENTION

However, in the production method of Patent Document 1, the exfoliation force of the graphitic material is weak, and there is a case in which the surfaces of the solid electrode active material particles are not uniformly covered. Therefore, the graphene compound obtained by the production method of Patent Document 1 is still insufficient in conductivity, and for example when the graphene compound is used for an electrode material of a secondary battery, the graphene compound has a problem of not being able to sufficiently improve battery characteristics such as rate characteristics and cycle characteristics of the secondary battery.

Therefore, conventionally, there has been no method for efficiently exfoliating a layered compound such as graphite and covering a particle surface with an exfoliated product without oxidizing. In addition, there has been no technique for uniformly covering particles with an exfoliated product such as graphene without aggregation of the exfoliated product. Therefore, it has not been possible to sufficiently improve the conductivity of the particles.

An object of the present invention is to provide a method for producing particles with which particles excellent in conductivity can be produced easily.

### MEANS FOR SOLVING THE PROBLEMS

A method for producing a particle according to the present invention is a method for producing particles, the particles including a particle body and a covering layer covering at least a part of the particle body, the method including a step of preparing a mixture containing the particle body, a layered compound, and a dispersion medium, and a step of applying a shear force to the mixture to exfoliate the layered compound and cover the particle body with the layered compound to form the covering layer, and the dispersion medium having a viscosity at 25°C of 1 mPa·s or more.

In a specific aspect of the method for producing particles according to the present invention, the dispersion medium is in a sol state, a gel state, or a liquid state.

In another specific aspect of the method for producing particles according to the present invention, the dispersion medium contains a dispersion medium having an SP value of 5 or more and 20 or less.

In still another specific aspect of the method for producing particles according to the present invention, the dispersion medium contains a solvent having a molecular weight of 40 or more.

In still another specific aspect of the method for producing particles according to the present invention, the layered compound contains graphite or a graphite oxide.

In still another specific aspect of the method for producing particles according to the present invention, the layered compound contains boron nitride or a graphite-like layered compound.

In still another specific aspect of the method for producing particles according to the present invention, the particle body has an average particle diameter of 20 µm or less.

In still another specific aspect of the method for producing particles according to the present invention, the particle body has a true density of 0.8 g/cm³ or more.

In still another specific aspect of the method for producing particles according to the present invention, the particle body is a metal or a metal compound.

In still another specific aspect of the method for producing particles according to the present invention, the shear force is applied by at least one method selected from the group consisting of ball mill, stirring, ultrasonic wave, high pressure release, and planetary stirring.

In still another specific aspect of the method for producing particles according to the present invention, the layered compound is exfoliated and the particle body is covered by the layered compound by applying the shear force in a state where the mixture is cooled to increase its viscosity.

In still another specific aspect of the method for producing particles according to the present invention, a step of removing the dispersion medium after the step of forming the covering layer is further included.

In still another specific aspect of the method for producing particles according to the present invention, in the step of removing the dispersion medium, the dispersion medium is removed by means of solid-liquid separation or volatilization with heating or decompression.

In still another specific aspect of the method for producing particles according to the present invention, a step of carbonizing the dispersion medium by heating after the step of forming the covering layer is further included.

In still another specific aspect of the method for producing particles according to the present invention, a step of removing the carbonized dispersion medium is further included.

### EFFECT OF THE INVENTION

The present invention can provide a method for producing particles with which particles excellent in conductivity can be produced easily.

### BRIEF DESCRIPTION OF DRAWINGS

[Fig. 1] Figs. 1(a) to 1(c) are schematic views for describing an example of a method for producing particles according to the present invention.
[Fig. 2] Fig. 2 is a schematic cross-sectional view illustrating an example of a particle produced by the method for producing particles according to the present invention.
[Fig. 3] Fig. 3 is a diagram illustrating a result of thermogravimetric analysis measurement of particles before removal of amorphous carbon in Example 1.
[Fig. 4] Fig. 4 is a diagram illustrating a result of thermogravimetric analysis measurement of particles before removal of amorphous carbon in Example 2.
[Fig. 5] Fig. 5 is a diagram illustrating a result of thermogravimetric analysis measurement of particles before removal of amorphous carbon in Example 3.
[Fig. 6] Fig. 6 is a diagram illustrating a result of thermogravimetric analysis measurement of particles before removal of amorphous carbon in Example 4.
[Fig. 7] Fig. 7 is a diagram illustrating a result of thermogravimetric analysis measurement of particles before removal of amorphous carbon in Example 1.
[Fig. 8] Fig. 8 is a diagram illustrating a result of thermogravimetric analysis measurement of particles before removal of amorphous carbon in Example 2.
[Fig. 9] Fig. 9 is a diagram illustrating a result of thermogravimetric analysis measurement of particles before removal of amorphous carbon in Example 3.
[Fig. 10] Fig. 10 is a diagram illustrating a result of thermogravimetric analysis measurement of particles before removal of amorphous carbon in Example 4.
[Fig. 11] Fig. 11 is a diagram illustrating a result of thermogravimetric analysis measurement of particles of Comparative Example 1.
[Fig. 12] Fig. 12 is a diagram illustrating a result of thermogravimetric analysis measurement of particles of Comparative Example 2.
[Fig. 13] Fig. 13 is a diagram illustrating a result of thermogravimetric analysis measurement of particles of Comparative Example 3.
[Fig. 14] Fig. 14 is a diagram illustrating a result of thermogravimetric analysis measurement of particles of Comparative Example 4.
[Fig. 15] Fig. 15 is a transmission electron micrograph of a particle obtained in Example 4 before removal of amorphous carbon.
[Fig. 16] Fig. 16 is a transmission electron micrograph of a particle obtained in Example 4 before removal of amorphous carbon.

### MODES FOR CARRYING OUT THE INVENTION

Hereinafter, details of the present invention will be described.

### [Method for Producing Particles]

In a method for producing particles according to the present invention, a particle including a particle body and a covering layer covering at least a part of the particle body is produced.

Specifically, first, a mixture including a particle body, a layered compound, and a dispersion medium is prepared. Next, a shear force is applied to the prepared mixture. Applying a shear force causes the layered compound to be exfoliated and applied to the particle body to form a covering layer, and the particles of the present invention can be obtained. In the present invention, the viscosity of the dispersion medium at 25°C is 1 mPa·s or more. Comparatively, for example, water has a viscosity of 0.88 mPa·s at 25°C.

In the method for producing particles according to the present invention, since the viscosity of the dispersion medium is 1 mPa·s or more, the layered compound can be exfoliated easily and the particle body can be covered by the layered compound only by applying a shear force to the mixture. Therefore, the particles of the present invention can be produced easily without requiring complicated steps. In addition, since the above-described production process can be performed in a non-oxidizing environment, the conductivity of the obtained particles can also be improved.

The particles obtained by the method for producing particles of the present invention, which are excellent in conductivity as described above, can be suitably used for an electrode material of a power storage device and the like. In particular, the particles can be suitably used for a positive electrode active material and a negative electrode active material constituting an electrode of a power storage device. Using the particles obtained by the production method of the present invention for an electrode material of a power storage device enables characteristics such as cycle characteristics due to charge and discharge to improve.

Hereinafter, each step of the method for producing particles according to the present invention will be described in more detail.

### (Mixture Preparation Step)

In a mixture preparation step, a mixture including a particle body, a layered compound, and a dispersion medium is prepared.

### Particle body;

The shape of the particle body is not limited to particular shapes, and for example, a spherical shape, a substantially spherical shape, a scaly shape, a planar shape, an elliptical shape, a substantially elliptical shape, or the like may be used. In addition to the above shapes, a structure having a hollow or porous inside may also be used. Among them, a spherical shape or a substantially spherical shape is preferable.

The average particle diameter of the particle body is not limited to particular values. The average particle diameter of the particle body is preferably 10 nm or more, more preferably 50 nm or more, and preferably 20 µm or less, more preferably 10 µm or less, still more preferably 5 µm or less. When the average particle diameter of the particle body is within the above range, the layered compound can be exfoliated more easily, and the particle body can be covered by the layered compound with increased reliability. The average particle diameter refers to a value calculated with a volume-based distribution using a particle size distribution measuring apparatus using a dynamic light scattering method or a particle size distribution measuring apparatus using a laser diffraction method.

The true density of the particle body is not limited to particular values, and is preferably 0.8 g/cm³ or more, and more preferably 2 g/cm³ or more. In this case, the layered compound can be exfoliated more easily, and the particle body can be covered by the layered compound with increased reliability. The upper limit value of the true density of the particle body is not limited to particular values, and it may be, for example, 20 g/cm³.

The particle body is not limited to particular substances, and examples thereof include a metal or a metal compound, a semiconductor or a semiconductor compound, and sulfur or a sulfur compound. In particular, when the particle constitutes a negative electrode active material, the particle body is desirably a particle capable of occluding and releasing alkali metal ions or alkaline earth metal ions. Examples of the alkali metal ion include lithium ion, sodium ion, and potassium ion. Examples of the alkaline earth metal include calcium ions and magnesium ions. Among them, a metal or a metal compound capable of occluding and releasing lithium ions is desirable.

As the metal or the metal compound, for example, Mg, Al, Ca, Sc, Ti, V, Mn, Fe, Co, Ni, Cu, Zn, Ga, Sr, Y, Zr, Nb, Mo, Tc, Ru, Pd, Ag, Cd, In, Sn, Ba, Hf, Ta, W, Re, Os, Ir, Pt, Au, Hg, Tl, Pb, or a compound thereof may be used.

As the semiconductor or the semiconductor compound, for example, Si, P, Ge, As, Se, Sb, Te, Bi, Po, or a compound thereof may be used.

Among them, when the particle is used for a negative electrode active material of a lithium ion secondary battery (LiB negative electrode active material), examples of the particle body include Si, a compound of Si, Sn, and a compound of Sn. Examples of the compound of Si include alloys of Si and other metals, and Si oxides such as SiO and SiO₂. Examples of the compound of Sn include alloys of Sn and other metals, and Sn oxides such as SnO and SnO₂. In this case, characteristics such as the capacity of a power storage device can be further enhanced. These metals or metal compounds may be used singly or in combination of two or more kinds thereof.

When the particle is used for a positive electrode active material (LiB positive electrode active material) of a lithium ion secondary battery, examples of the particle body include a lithium metal oxide, a lithium sulfide, a nickel compound, and sulfur.

Examples of the lithium metal oxide include a compound having a layered rock salt type structure, a compound having a spinel type structure, a compound having an olivine type structure, and a mixture thereof.

Examples of the compound having a layered rock salt type structure include lithium cobalt oxide and lithium nickel oxide.

Examples of the compound having a spinel type structure include lithium manganese oxide.

Examples of the compound having an olivine type structure include lithium iron phosphate.

Among them, the particle body is preferably lithium cobalt oxide.

The particle body may be a granulated body in which a plurality of particles are bonded. As the granulated body, for example, nickel, manganese, and cobalt ternary Li (NiMnCo)O₂ (NMC) may be used.

The content of the particle body in the mixture is preferably 1 wt% or more and 50 wt% or less. In this case, the layered compound can be exfoliated more easily, and the particle body can be covered by the layered compound with increased reliability.

### Layered compound;

The layered compound is not limited to particular substances, and for example, graphite, a graphite oxide, boron nitride, a graphite-like layered compound (BC2N), or the like may be used. These layered compounds may be used singly or in combination of two or more kinds thereof. In particular, when the layered compound is used in a secondary battery such as a lithium ion secondary battery (LiB), the layered compound preferably contains graphite, and more preferably, the layered compound is graphite. In this case, the conductivity of the resulting particles can be further enhanced. On the other hand, it is preferable to use an insulating layered compound such as boron nitride for applications such as a thermal conductive sheet requiring insulating properties.

Graphite is a layered body of a plurality of graphene sheets. The number of graphene sheet layers of graphite is usually about 100,000 to 1 million. As the graphite, for example, natural graphite, artificial graphite, expanded graphite, or the like may be used.

As described above, as the layered compound, a layered body of a sheet material may be used.

The content of the layered compound in the mixture is preferably 0.01 wt% or more and 30 wt% or less. In this case, the layered compound can be exfoliated more easily, and the particle body can be covered by the layered compound with increased reliability.

### Dispersion medium;

The viscosity of the dispersion medium at 25°C is 1 mPa·s or more, preferably 1.5 mPa·s or more, and more preferably 10 mPa·s or more. In this case, the layered compound can be exfoliated more easily, and the particle body can be covered by the layered compound with increased reliability. The upper limit value of the viscosity of the dispersion medium at 25°C may be, for example, 10 million mPa·s.

The viscosity of the dispersion medium may be measured under the condition of 25°C using, for example, an E-type viscometer (manufactured by Toki Sangyo Co., Ltd., TV-25 Type-H viscometer).

The form of the dispersion medium may be any form of a sol form, a gel form, or a liquid form.

The dispersion medium is not limited to particular media, and for example, polyethylene glycol, polypropylene glycol, sucrose, polyvinyl alcohol, vinyl acetate, polystyrene, polyamine, silicon oil, carboxymethyl cellulose, water, ethanol, methanol, propanol, dimethylformamide, or the like may be used. These dispersion media may be used singly or in combination of two or more kinds thereof. In addition, these dispersion media may be in the state of a solution in which a solute is dissolved in a solvent such as water. In this case, the viscosity of the dispersion medium refers to the viscosity of the solution. Specifically, for example, a sucrose aqueous solution or the like may be used as the dispersion medium, the viscosity of a 20% sucrose aqueous solution at 25°C is 1.68 mPa·s, and the viscosity of a 50% sucrose aqueous solution at 25°C is 12.98 mPa·s.

The SP value of the dispersion medium is not limited to particular values, and is preferably 5 or more, more preferably 8 or more, and preferably 20 or less, more preferably 18 or less. In this case, the layered compound can be exfoliated more easily, and the particle body can be covered by the layered compound with increased reliability.

The SP value is a scale of affinity between substances. The SP value may be determined based on Hidebrand's theory of regular solution. The SP value may also be obtained from literature information, by Hansen's or Hoy's calculation method, Fedors' estimation method, and the like. Among them, it is desirable to use a calculated value calculated by Fedors' equation δ² = ΣE/ΣV (δ represents SP value, E represents evaporation energy, and V represents molar volume) . The unit of the SP value is (cal/cm³)^{0.5}. The Fedors' method is described in Journal of the Japan Adhesion Society of Japan, 1986, vol. 22, p. 566.

The molecular weight of the dispersion medium is not limited to particular values, and is preferably 20 or more, and more preferably 40 or more. With the molecular weight of these values, the viscosity of the dispersion medium increases, the layered compound can be exfoliated more easily, and the particle body can be covered by the layered compound with increased reliability. The upper limit value of the molecular weight of the dispersion medium is not limited to particular values, and may be, for example, 10,000. When the dispersion medium is a mixed solvent of a plurality of solvents, or when the dispersion medium is a solution in which a solute is dissolved in a solvent, the molecular weight is subjected to weighted average with the blending ratio.

The content of the dispersion medium in the mixture is not limited to particular values and is preferably 100 parts by weight or more with respect to 100 parts by weight of the charged weight of the layered compound for use in exfoliating the layered compound. With the content of these values, the layered compound can be exfoliated more easily, and the particle body can be covered by the layered compound with increased reliability. On the other hand, the content of the dispersion medium in the mixture is preferably 500 parts by weight or less with respect to 100 parts by weight of the charged weight of the particle body. In this case, the use of an excess dispersion medium can be reduced, and covered particles can be obtained more efficiently.

### (Covering Layer Formation Step)

In a covering layer formation step, a shear force is applied to the mixture obtained in the mixture preparation step. Applying a shear force causes the layered compound to be exfoliated and applied to the particle body to form a covering layer. In the present invention, an exfoliated product obtained by exfoliating the layered compound may cover the particle body, or the layered compound that covers the particle body may be peeled off. Alternatively, both cases may be applied. The covering layer containing the exfoliated product of the layered compound can be formed by either method. The covering layer may contain the layered compound before exfoliation.

The method of applying a shear force to the mixture is not limited to particular methods, and for example, a method such as a ball mill, stirring, ultrasonic wave, high pressure release, or planetary stirring may be used. Among them, planetary stirring is preferable. In this case, the layered compound can be exfoliated more easily, and the particle body can be covered by the layered compound with increased reliability. As the method of applying the shear force, one method may be used singly, or a plurality of methods may be used in combination.

When a shear force is applied to the mixture, a shear force may be applied while cooling the viscosity of the dispersion medium. In this case, even when a dispersion medium having a low viscosity at room temperature is used, the layered compound can be exfoliated easily, the particle body can be covered by the layered compound with increased reliability, and the dispersion medium is removed more easily when the dispersion medium is removed in the subsequent step. In addition, when a shear force is applied to the mixture, a shear force may be applied while the mixture is heated to reduce the viscosity of the dispersion medium. In this case, a dispersion medium having a high viscosity at room temperature can be used, which enables the layered compound to be exfoliated more easily and the particle body to be covered by the layered compound with increased reliability. The temperature at the time of cooling or heating depends on the type of the dispersion medium and may be, for example, -30°C or more and 200°C or less.

In the case of cooling or heating the mixture when a shear force is applied, the viscosity of the dispersion medium at the temperature during the cooling or heating is preferably 1 mPa·s or more, more preferably 1.5 mPa·s or more, and particularly preferably 10 mPa·s or more. In this case, the layered compound can be exfoliated more easily, and the particle body can be covered by the layered compound with increased reliability.

In the case of cooling or heating the mixture when a shear force is applied to the mixture, the viscosity of the dispersion medium at the temperature during the cooling or heating is preferably 10 million mPa·s or less, and more preferably 1 million mPa·s or less. In this case, a shear force is applied to the mixture more easily.

In the present invention, the dispersion medium may be removed after the layered compound is applied to the particle body. In this case, the removal of the dispersion medium may be performed, for example, by means of solid-liquid separation or volatilization with heating or decompression. The heating may be performed in the air or under an inert gas atmosphere such as nitrogen gas.

In the present invention, the dispersion medium may be carbonized by heating after the layered compound is applied to the particle body. A covering layer containing amorphous carbon and an exfoliated product of the layered compound may be thus formed. In this case, the heating temperature may be, for example, 200°C or more and 600°C or less. The heating time may be 20 minutes or more and 480 minutes or less. The heating may be performed in the air or under an inert gas atmosphere such as nitrogen gas.

The carbonized dispersion medium may be further removed by heating. This removal can further enhance the conductivity of the resulting particles. In this case, the heating temperature may be, for example, 300°C or more and 800°C or less. The heating time may be 10 minutes or more and 300 minutes or less. It is preferable that the heating is performed under the condition that the carbonized dispersion medium (amorphous carbon) is burned out and the exfoliated product of the layered compound is not burned out. For example, the heating may be performed under conditions for example at 500°C for 30 minutes in the air.

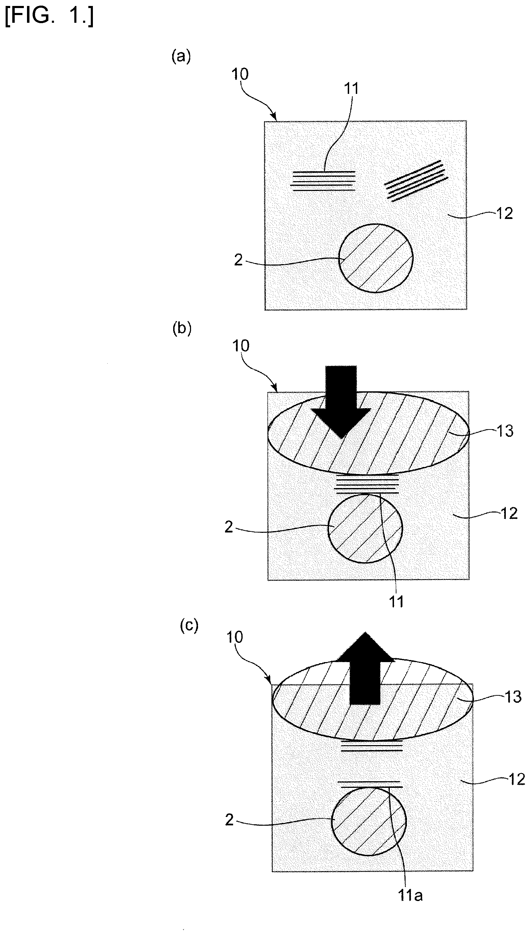

Hereinafter, a specific example of a method for producing particles according to the present invention will be described with reference to Fig. 1.

Figs. 1(a) to 1(c) are schematic views for describing an example of a method for producing particles according to the present invention.

First, as illustrated in Fig. 1(a), a particle body 2, a layered compound 11, and a dispersion medium 12 are added to a container 10 to prepare a mixture. The layered compound 11 may be used as it is, or may be pulverized and classified with a ball mill, a feather mill, an ultrasonic wave, a pulverization classifier, a sieve, or the like.

Next, the mixture is rotated and mixed together with a ball 13 illustrated in Fig. 1(b) by rotation and revolution movements using a ball mill. This rotation and mixing causes a shear force from the ball 13 to the mixture as illustrated in Figs. 1(b) and 1(c). Repeating this operation exfoliates the layered compound 11 and at the same attaches an exfoliated product 11a of the layered compound and the dispersion medium 12 to the surface of the particle body 2.

As the ball mill, for example, a planetary ball mill (product number "NP-100" manufactured by THINKY CORPORATION) may be used. The rotation speed may be, for example, 400 rpm or more and 2000 rpm or less. The rotation time may be, for example, 5 minutes or more and 600 minutes or less. As the ball 13, for example, a ceramic ball may be used. In the present embodiment, a zirconia ball is used as the ball 13.

Next, the particle body 2 to which the exfoliated product 11a of the layered compound and the dispersion medium 12 are attached is taken out from the container 10. Subsequently, the particle body 2 having the exfoliated product 11a of the layered compound and the dispersion medium 12 attached to the surface thereof is heated at a temperature of 200°C or more and 600°C or less in a nitrogen atmosphere to carbonize the dispersion medium 12 and form amorphous carbon. Whereby, particles including a covering layer, the covering layer including the exfoliated product 11a of the layered compound and amorphous carbon can be obtained.

The amorphous carbon in the covering layer may be removed by further heating the obtained particles at a temperature of 300°C or more and 800°C or less in an air atmosphere. This removal can further enhance the conductivity of the particles.

As described above, in the method for producing particles of the present invention, the layered compound is exfoliated by a mechanical treatment. Therefore, no oxidation step of the layered compound is included unlike in the case where the layered compound is exfoliated by a chemical treatment. Therefore, particles excellent in conductivity can be obtained.

### [Particle]

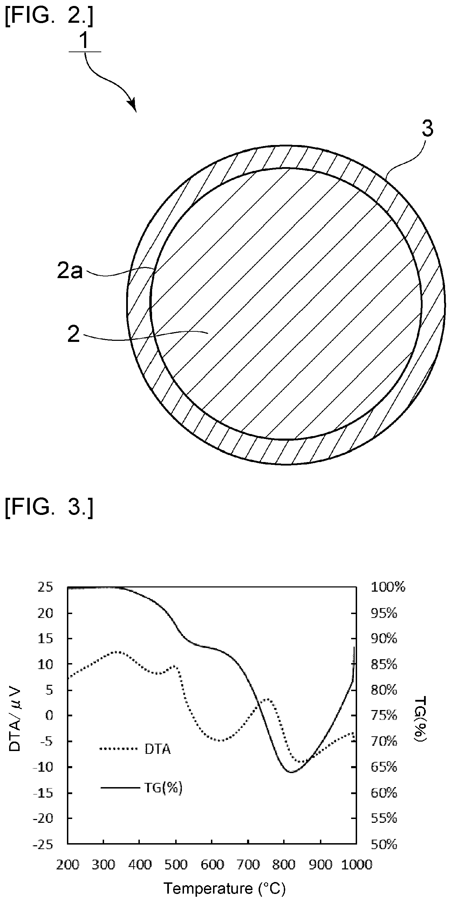

Fig. 2 is a schematic cross-sectional view illustrating an example of a particle produced by the method for producing particles according to the present invention.

As illustrated in Fig. 2, a particle 1 includes a particle body 2 and a covering layer 3. The covering layer 3 is provided so as to cover a surface 2a of the particle 2. As in the present embodiment, the covering layer 3 may cover the entire surface 2a of the particle body 2 or may cover a part of the surface 2a.

The covering layer 3 covers at least a part of the surface 2a of the particle body 2. The covering layer 3 preferably covers 20% or more, more preferably 90% or more, still more preferably 95% or more, particularly preferably 98% or more of the surface 2a of the particle body 2, and most preferably completely covers the surface 2a of the particle body 2. In this case, the conductivity of the particles can be further improved.

In the present invention, whether or not the surface of the particle body is covered by the covering layer may be checked with a scanning electron microscope (SEM), a transmission electron microscope (TEM), or the like. In this case, it may be checked by checking whether or not it is covered by carbon element (C element) using energy dispersive X-ray spectroscopy (SEM-EDX, TEM-EDX).

When the particle body is a particle that reacts with oxygen to form an oxide, such as a Si particle, the presence or absence of covering may be checked by checking whether or not a weight increase start temperature, which is an index of a temperature at which Si or the like as the particle body reacts with oxygen in the air as a measurement gas to start oxidation, is shifted to 600°C or more when thermogravimetric analysis of the particle is performed under an air atmosphere and under a condition of a temperature rise rate of 10 °C/min.

The thermogravimetric analysis may be performed by using a simultaneous thermogravimetric/calorimetric analyzer (manufactured by Hitachi High-Tech Science Corporation, product number "TGDTA6300"). The thermogravimetric analysis is performed under the following conditions.
Atmosphere: air atmosphere
Temperature rise rate: 10 °C/min
Temperature range: 40°C to 1000°C

In the present invention, the weight increase start temperature of the obtained particles is preferably 600°C or more, more preferably 700°C or more, and preferably 900°C or less. When the weight increase start temperature of the particles is the above lower limit value or more, the particle can be more uniformly covered by the covering layer, and the conductivity of the particles can be further enhanced. When the weight increase start temperature of the particle is the above upper limit value or less, the thickness of the covering layer is unlikely to increase. Therefore, when used for an electrode material of a power storage device, the particle can occlude and release ions such as lithium ions more smoothly and can further improve characteristics such as cycle characteristics due to charge and discharge.

The thickness of the covering layer is preferably 0.1 nm or more, more preferably 1 nm or more, and preferably 20 nm or less, more preferably 10 nm or less. When the thickness of the covering layer is the above lower limit value or more, the conductivity of the particles can be further enhanced. When the film thickness of the covering layer is the above upper limit value or less, the particle can occlude and release ions such as lithium ions more smoothly and can further improve characteristics such as cycle characteristics due to charge and discharge when used for an electrode material of a power storage device.

The thickness of the covering layer may be determined from the average value of the thicknesses of the covering layer of any three particles observed in a transmission electron microscope photograph (TEM photograph).

The covering layer contains an exfoliated product of the layered compound. Therefore, the particle is a particle covered by the exfoliated product of the layered compound. The exfoliated product of the layered compound may be exfoliated graphite.

In the present specification, the exfoliated graphite is obtained by exfoliating the original graphite and refers to a graphene sheet layered body thinner than the original graphite. The number of graphene sheet layers in the exfoliated graphite is smaller than that of the original graphite.

In the exfoliated product of the layered compound, the number of layers of sheet such as graphene sheet is not limited to particular values, and is preferably 1 or more, more preferably 3 or more, and preferably 100 or less, more preferably 10 or less. When the number of sheet layers is the above lower limit value or more, the conductivity of the particles can be further enhanced. When the number of sheet layers is the above upper limit value or less, the particle can occlude and release ions such as lithium ions more smoothly and can further improve characteristics such as cycle characteristics due to charge and discharge when used for an electrode material of a power storage device.

The content of the exfoliated product of the layered compound in the covering layer is preferably 0.01 wt% or more, more preferably 0.1 wt% or more, and preferably 30 wt% or less, more preferably 5 wt% or less with respect to 100 wt% of the material constituting the covering layer. When the content of the layered compound is within the above range, the conductivity of the particles can be further improved.

The covering layer may further contain a layered compound of a raw material. Specifically, the content of the layered compound in the covering layer may be, for example, 0.01 wt% or more and 10 wt% or less with respect to 100 wt% of the material constituting the covering layer.

The covering layer may further contain amorphous carbon. In this case, the surface of the particle body can be more uniformly covered.

Whether or not amorphous carbon is contained may be checked by checking whether or not a broad peak is observed in the vicinity of 2θ = 15° to 30° in the X-ray diffraction spectrum.

The content of amorphous carbon in the covering layer may be, for example, 1 wt% or more and 30 wt% or less with respect to 100 wt% of the material constituting the covering layer.

Since the particles obtained by the method for producing particles according to the present invention are uniformly covered by a exfoliated product of a layered compound excellent in conductivity as describe above, for example when the particles are used for a negative electrode active material of a secondary battery, it is possible to reduce a volume change associated with charge and discharge and to inhibit the negative electrode active material from cracking or peeling off from an electrode.

However, when the thickness of the covering layer is large, there is a case in which ions such as lithium ions are not released. The covering layer in the particles obtained by the production method of the present invention contains an exfoliated product of a layered compound. Consequently, the thickness of the covering layer does not become too thick, and the particles can occlude and release ions such as lithium ions smoothly. Therefore, the particles obtained in the present invention can improve characteristics such as cycle characteristics when used for an electrode material of a power storage device.

Hereinafter, the present invention will be described more specifically with reference to Examples, but the present invention is not limited by these Examples at all, and can be appropriately changed without changing the gist thereof.

### (Example 1)

Graphite (manufactured by Toyo Tanso Co., Ltd., product number "PF8") (1.2 g) as a layered compound was dispersed in a mixed solvent of 23.4 g of polyethylene glycol (manufactured by Sanyo Chemical Industries, Ltd., product number "PEG600", viscosity: 106 mPa·s (25°C), molecular weight: 600, SP value: 9.4) as a dispersion medium and 23.0 g of water (viscosity: 0.88 mPa·s (25°C), molecular weight: 18, SP value: 23.4) and stirred with a stirrer ("PRIMIX 2" manufactured by PRIMIX Corporation) under the conditions of a rotation speed of 11000 rpm and a stirring time of 30 minutes, and then the water was removed by treating the mixture at 150°C for 3 hours in an airflow circulation type oven to obtain a mixture of graphite and PEG600 as a dispersion medium. The viscosity of the dispersion medium was measured at 25°C using an E-type viscometer (manufactured by Toki Sangyo Co., Ltd., product name "TV-25 Type-H", spindle No. 1) .

Si particles (manufactured by Kanto Chemical Co., Inc., average particle diameter: 100 nm, true density: 2.33) (0.6 g) as a particle body were added to 6 g of the obtained mixture of graphite and the dispersion medium to prepare a mixture (graphite : PEG : Si = 1.2 wt% : 23.4 wt% : 2.46 wt%) .

Next, the prepared mixture was put in a zirconia container of a planetary ball mill (manufactured by THINKY CORPORATION, product number "NP-100") together with 2 mm zirconia balls (2.5 g), and planetary stirring was performed at a rotation speed of 2000 rpm for 25 minutes for mixing. After mixing, the particles taken out were heated at 420°C for 1 hour under nitrogen atmosphere. Whereby, particles in which the surfaces of the Si particles were covered by exfoliated graphite and amorphous carbon were obtained.

The obtained particles were heated at 500°C for 10 minutes under an air atmosphere. Whereby, the amorphous carbon was removed to obtain particles in which the surfaces of the Si particles were covered by the exfoliated graphite.

### (Example 2)

Graphite (manufactured by Toyo Tanso Co., Ltd., product number "PF8") (1 g) as a layered compound was dispersed in 234 g of 20 wt% sucrose water (prepared by dissolving a predetermined amount of special grade sucrose reagent manufactured by FUJIFILM Wako Pure Chemical Corporation in water) as a dispersion medium and stirred with a stirrer ("PRIMIX 2" manufactured by PRIMIX Corporation) under the conditions of a rotation speed of 11000 rpm and a stirring time of 30 minutes to obtain a mixture of graphite and a dispersion medium. The viscosity of the dispersion medium was measured at 25°C using an E-type viscometer (manufactured by Toki Sangyo Co., Ltd., product name "TV-25 Type-H", spindle No. 1) and was 1.68 mPa·s.

Si particles (manufactured by Kanto Chemical Co., Inc., average particle diameter: 100 nm, true density: 2.33) (0.6 g) as a particle body were added to 6 g of the obtained mixture of graphite and the dispersion medium to prepare a mixture (graphite : 20% sucrose water : Si = 1 wt% : 234 wt% : 23.5 wt%).

Next, the prepared mixture was put in a container of a planetary ball mill (manufactured by THINKY CORPORATION, product number "NP-100") together with 2 mm zirconia balls (2.5 g), and planetary stirring was performed at a rotation speed of 2000 rpm for 25 minutes for mixing. After mixing, the particles taken out were heated at 250°C for 1 hour under nitrogen atmosphere. Whereby, particles in which the surfaces of the Si particles were covered by exfoliated graphite and amorphous carbon were obtained.

The obtained particles were heated at 550°C for 10 minutes under an air atmosphere. Whereby, the amorphous carbon was removed to obtain particles in which the surfaces of the Si particles were covered by the exfoliated graphite.

### (Example 3)

Graphite (manufactured by Toyo Tanso Co., Ltd., product number "PF8") (1 g) as a layered compound was dispersed in 234 g of 50 wt% sucrose water (prepared by dissolving a predetermined amount of special grade sucrose reagent manufactured by FUJIFILM Wako Pure Chemical Corporation in water) as a dispersion medium and stirred with a stirrer ("PRIMIX 2" manufactured by PRIMIX Corporation) under the conditions of a rotation speed of 11000 rpm and a stirring time of 30 minutes to obtain a mixture of graphite and a dispersion medium. The viscosity of the dispersion medium was measured at 25°C using an E-type viscometer (manufactured by Toki Sangyo Co., Ltd., product name "TV-25 Type-H", spindle No. 1) and was 12.98 mPa·s.

Si particles (manufactured by Kanto Chemical Co., Inc., average particle diameter: 100 nm, true density: 2.33) (0.6 g) as a particle body were added to 6 g of the obtained mixture of graphite and the dispersion medium to prepare a mixture (graphite : 50% sucrose water : Si = 1 wt% : 234 wt% : 23.5 wt%).

Next, the prepared mixture was put in a container of a planetary ball mill (manufactured by THINKY CORPORATION, product number "NP-100") together with 2 mm zirconia balls (2.5 g), and planetary stirring was performed at a rotation speed of 2000 rpm for 25 minutes for mixing. After mixing, the particles taken out were heated at 250°C for 1 hour under nitrogen atmosphere. Whereby, particles in which the surfaces of the Si particles were covered by exfoliated graphite and amorphous carbon were obtained.

The obtained particles were heated at 600°C for 10 minutes under an air atmosphere. Whereby, the amorphous carbon was removed to obtain particles in which the surfaces of the Si particles were covered by the exfoliated graphite.

### (Example 4)

Graphite (manufactured by Toyo Tanso Co., Ltd., product number "PF8") (1 g) as a layered compound was dispersed in 234 g of polyethylene glycol (manufactured by Sanyo Chemical Industries, Ltd., product number "PEG600", viscosity: 106 mPa·s (25°C), molecular weight: 600, SP value: 9.4) as a dispersion medium and stirred with a stirrer ("PRIMIX 2" manufactured by PRIMIX Corporation) under the conditions of a rotation speed of 11000 rpm and a stirring time of 30 minutes to obtain a mixture of graphite and PEG600 as a dispersion medium. The viscosity of the dispersion medium was measured at 25°C using an E-type viscometer (manufactured by Toki Sangyo Co., Ltd., product name "TV-25 Type-H", spindle No. 1).

Si particles (manufactured by Kanto Chemical Co., Inc., average particle diameter: 100 nm, true density: 2.33) (0.6 g) as a particle body were added to 6 g of the obtained mixture of graphite and the dispersion medium to prepare a mixture (graphite : PEG : Si = 1 wt% : 234 wt% : 23.5 wt%).

Next, the prepared mixture was put in a zirconia container of a planetary ball mill (manufactured by THINKY CORPORATION, product number "NP-100") together with 2 mm zirconia balls (2.5 g), and planetary stirring was performed at a rotation speed of 2000 rpm for 25 minutes for mixing. After mixing, the particles taken out were heated at 420°C for 1 hour under nitrogen atmosphere. Whereby, particles in which the surfaces of the Si particles were covered by exfoliated graphite and amorphous carbon were obtained.

The obtained particles were heated at 500°C for 10 minutes under an air atmosphere. Whereby, the amorphous carbon was removed to obtain particles in which the surfaces of the Si particles were covered by the exfoliated graphite.

### (Comparative Example 1)

Si particles (manufactured by Kanto Chemical Co., Inc., average particle diameter: 100 nm) were used as they were.

### (Comparative Example 2)

Graphite (manufactured by Toyo Tanso Co., Ltd., product number "PF8") (1 g) as a layered compound was dispersed in 234 g (viscosity: 0.88 mPa·s, SP value: 23.4) of water and stirred with a stirrer ("PRIMIX 2" manufactured by PRIMIX Corporation) under the conditions of a rotation speed of 11000 rpm and a stirring time of 30 minutes to obtain a mixture of graphite and water.

Si particles (manufactured by Kanto Chemical Co., Inc., average particle diameter: 100 nm, true density: 2.33) (0.6 g) as a particle body were added to 6 g of the obtained mixture of graphite and the dispersion medium to prepare a mixture (graphite : water : Si = 1 wt% : 234 wt% : 23.5 wt%) .

Next, the prepared mixture was put in a zirconia container of a planetary ball mill (manufactured by THINKY CORPORATION, product number "NP-100") together with 2 mm zirconia balls (2.5 g), and planetary stirring was performed at a rotation speed of 2000 rpm for 25 minutes for mixing. The obtained mixture was taken out to a glass petri dish and subjected to vacuum drying treatment at 120°C for 24 hours to remove water, whereby particles were obtained.

### (Comparative Example 3)

Graphite (manufactured by Toyo Tanso Co., Ltd., product number "PF8") (0.0255 g) and 0.6 g of Si particles (manufactured by Kanto Chemical Co., Inc., average particle diameter: 100 nm, true density: 2.33) were added to prepare a mixture (graphite : Si = 1 wt% : 23.5 wt%).

Next, the prepared mixture was put in a container of a planetary ball mill (manufactured by THINKY CORPORATION, product number "NP-100") together with 2 mm zirconia balls (2.5 g), and planetary stirring was performed at a rotation speed of 2000 rpm for 25 minutes for mixing. Whereby, particles were obtained.

### (Comparative Example 4)

Graphite (manufactured by Toyo Tanso Co., Ltd., product number "PF8") (0.0255 g) and 0.6 g of Si particles (manufactured by Kanto Chemical Co., Inc., average particle diameter: 100 nm, true density: 2.33) were placed in a container of a planetary ball mill (manufactured by THINKY CORPORATION, product number "NP-100"), and planetary stirring was performed at a rotation speed of 2000 rpm for 25 minutes for mixing. Whereby, particles were obtained. In Comparative Example 4, 2 mm zirconia balls were not used.

### <Evaluation>

### (Thermogravimetric Measurement)

The particles obtained in Examples 1 to 4 and the particles in Comparative Examples 1 to 4 were measured under the following conditions using a simultaneous thermogravimetric/calorimetric analyzer (manufactured by Hitachi High-Tech Science Corporation, product number "TGDTA6300") .
Atmosphere: air atmosphere
Temperature rise rate: 10 °C/min
Temperature range: 40°C to 1000°C

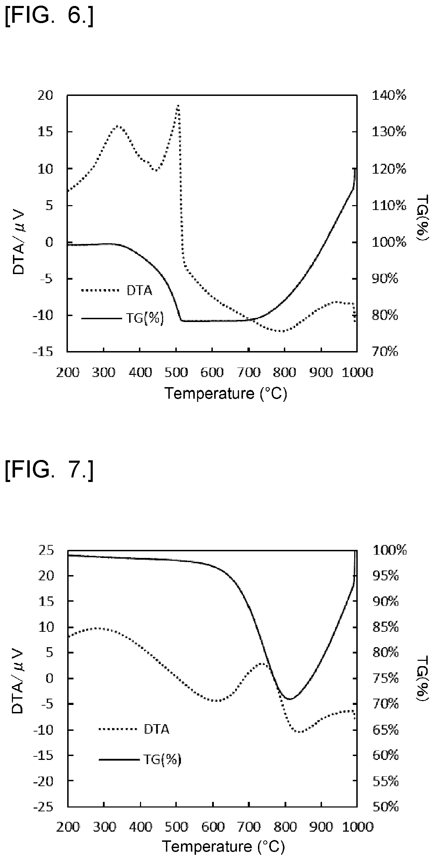

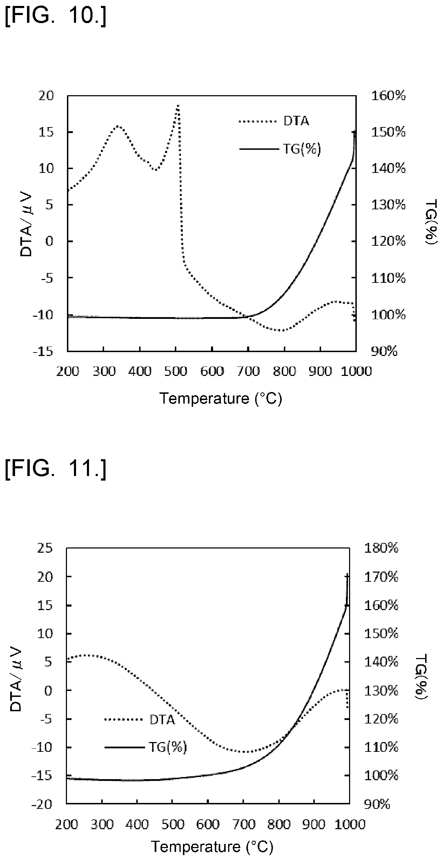

Figs. 3 to 6 are diagrams respectively illustrating the results of the thermogravimetric analysis measurement of the particles before the removal of amorphous carbon in Examples 1 to 4 in this order. Figs. 7 to 10 are diagrams respectively illustrating the results of the thermogravimetric analysis measurement of the particles after removal of amorphous carbon in Examples 1 to 4 in this order. Figs. 11 to 14 are diagrams respectively illustrating the results of the thermogravimetric analysis measurement of the particles of Comparative Examples 1 to 4 in this order.

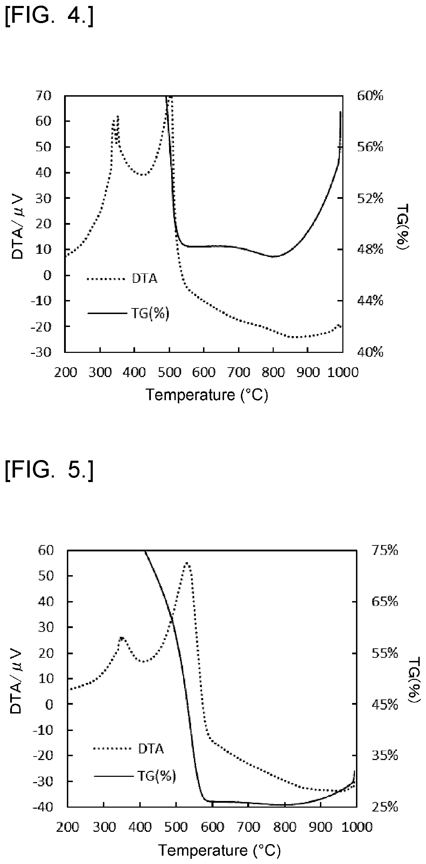

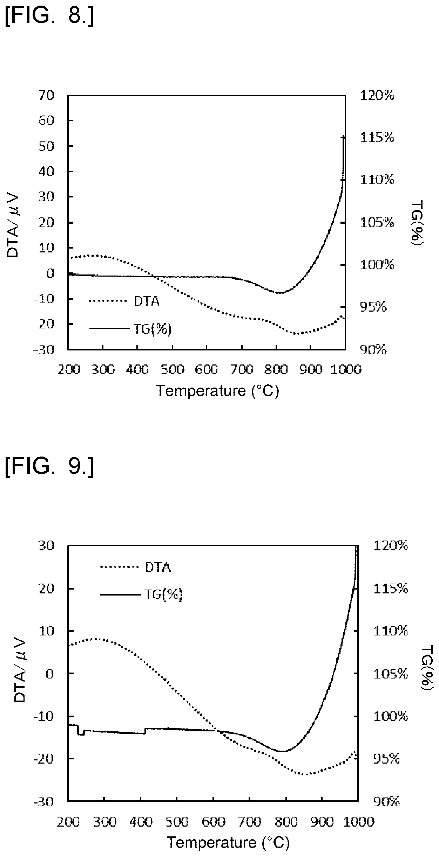

Figs. 3 and 7 show that the weight increase start temperature exceeds 800°C in the particles obtained in Example 1. Figs. 4 and 8 show that the weight increase start temperature exceeds 800°C in the particles obtained in Example 2. Figs. 5 and 9 show that the weight increase start temperature is around 800°C in the particles obtained in Example 3. Figs. 6 and 10 show that the weight increase start temperature exceeds 700°C in the particles obtained in Example 4.

In Si particles (uncovered Si particles) of Comparative Example 1 used as a raw material, the weight increase start temperature is around 400°C to 500°C as illustrated in Fig. 11, and from this, in Examples 1 to 4, the oxidation temperature of Si is shifted to the high temperature side, and it can be seen that the Si particles are covered by exfoliated graphite. Figs. 7 to 10 show that the weight loss on the low temperature side (around 500°C) existing in Figs. 3 to 6 has decreased or disappeared. From this, it can be confirmed that the amorphous carbon has decreased or disappeared.

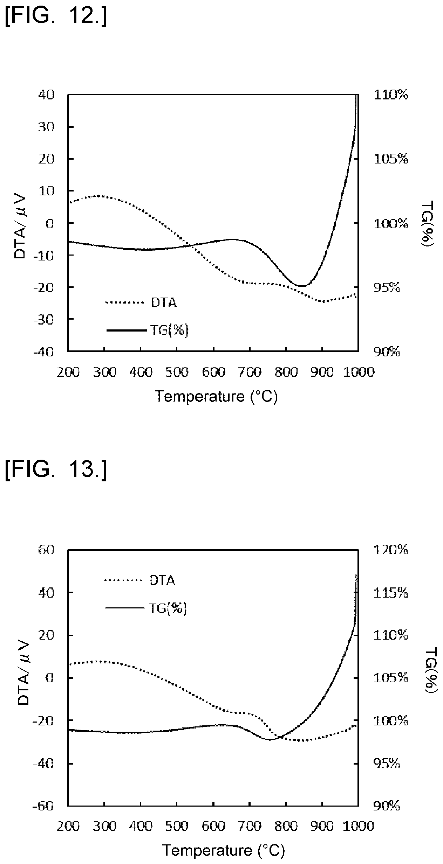

On the other hand, from Figs. 12 to 14, in the particles of Comparative Examples 2 to 4, similarly to the particles of Comparative Example 1, the weight increase start temperature derived from the oxidation of Si was observed at 400°C to 500°C. From this, it was confirmed that the particles were not sufficiently covered by the carbon material.

### (Observation of Covering State)

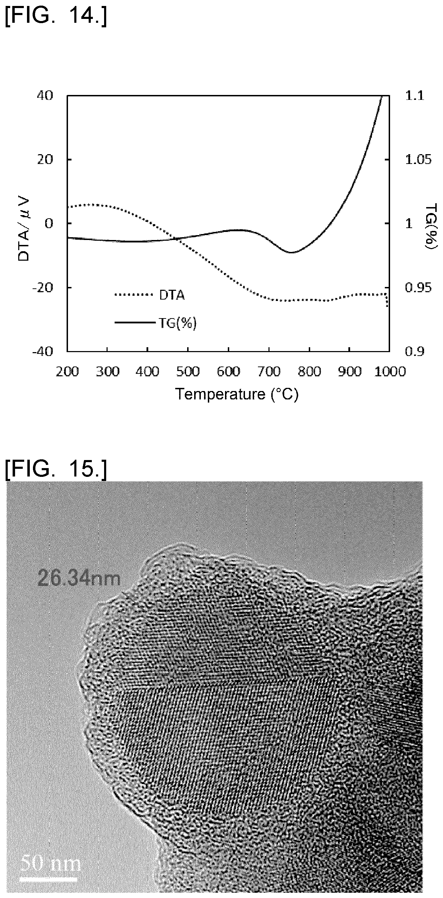

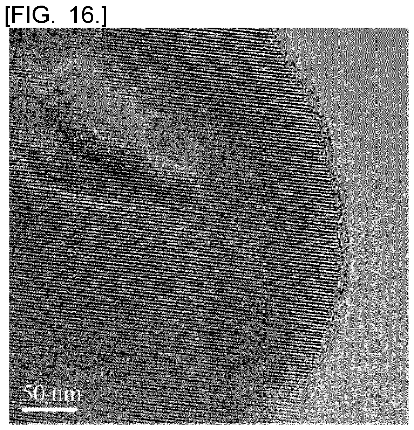

Fig. 15 is a transmission electron micrograph of a particle obtained in Example 4 before removal of amorphous carbon. Fig. 16 is a transmission electron micrograph of a particle obtained in Example 4 after removal of amorphous carbon. As illustrated in Figs. 15 and 16, in Example 4, it was confirmed that a covering layer was produced on the entire surface of the particle body. In Examples 1 to 3 as well, it was confirmed that a covering layer was produced on the entire surface of the particle body. In Example 4, the thickness of the covering layer was 5 nm to 40 nm before removal of amorphous carbon, and 0.5 nm to 10 nm after removal of amorphous carbon. In Example 1, the thickness was 20 nm to 100 nm before removal of amorphous carbon.

### (Powder Resistance Measurement)

Resistance of the particles obtained in Example 1 and Comparative Example 1 at a predetermined load was measured using a powder resistance measurement device (manufactured by Mitsubishi Chemical Analytech Co., Ltd., product number "PD-51").

Specifically, 0.2 g of each sample was weighed and placed in a sample holder, the load was gradually increased from 0 kN to 16 kN, and resistance at 16 kN was compared. The results are shown in Table 1 below.

**[Table 1]**

| | Example 1 | | Comparative Example 1 |
|---|---|---|---|
| | Before removal of amorphous carbon | After removal of amorphous carbon | |
| Powder resistance value | 0.1495Ω | 0.03999Ω | Measurement upper limit or more |

From Table 1, it was confirmed that the conductivity was improved by covering the silicon particles of Comparative Example 1 having high resistance with carbon, and the conductivity was further improved by further removing amorphous carbon to increase the covering ratio of crystalline carbon.

### EXPLANATION OF SYMBOLS

1: Particle
2: Particle body
2a: Surface
3: Covering layer
10: Container
11: Layered compound
11a: Exfoliated product of layered compound
12: Dispersion medium
13: Ball

## Claims

1. A method for producing particles,
the particles comprising:
a particle body; and
a covering layer covering at least a part of the particle body,
the method comprising:
a step of preparing a mixture containing the particle body, a layered compound, and a dispersion medium; and
a step of applying a shear force to the mixture to exfoliate the layered compound and cover the particle body with the layered compound to form the covering layer, and
the dispersion medium having a viscosity at 25°C of 1 mPa·s or more.

2. The method for producing particles according to claim 1, wherein the dispersion medium is in a sol state, a gel state, or a liquid state.

3. The method for producing particles according to claim 1 or 2, wherein the dispersion medium contains a dispersion medium having an SP value of 5 or more and 20 or less.

4. The method for producing particles according to any one of claims 1 to 3, wherein the dispersion medium contains a solvent having a molecular weight of 40 or more.

5. The method for producing particles according to any one of claims 1 to 4, wherein the layered compound contains graphite or a graphite oxide.

6. The method for producing particles according to any one of claims 1 to 4, wherein the layered compound contains boron nitride or a graphite-like layered compound.

7. The method for producing particles according to any one of claims 1 to 6, wherein the particle body has an average particle diameter of 20 µm or less.

8. The method for producing particles according to any one of claims 1 to 7, wherein the particle body has a true density of 0.8 g/cm³ or more.

9. The method for producing particles according to any one of claims 1 to 8, wherein the particle body is a metal or a metal compound.

10. The method for producing particles according to any one of claims 1 to 9, wherein the shear force is applied by at least one method selected from the group consisting of ball mill, stirring, ultrasonic wave, high pressure release, and planetary stirring.

11. The method for producing particles according to any one of claims 1 to 10, wherein the layered compound is exfoliated and the particle body is covered by the layered compound by applying the shear force in a state where the mixture is cooled to increase its viscosity.

12. The method for producing particles according to any one of claims 1 to 11, further comprising a step of removing the dispersion medium after the step of forming the covering layer.

13. The method for producing particles according to claim 12, wherein in the step of removing the dispersion medium, the dispersion medium is removed by means of solid-liquid separation or volatilization with heating or decompression.

14. The method for producing particles according to any one of claims 1 to 11, further comprising a step of carbonizing the dispersion medium by heating after the step of forming the covering layer.

15. The method for producing particles according to claim 14, further comprising a step of removing the carbonized dispersion medium.
